# EUROPEAN PATENT SPECIFICATION

(11) **EP 4 307 918 B1**
(45) Date of publication and mention of the grant of the patent: **21.10.2026**
(21) Application number: 22711641.5
(22) Date of filing: 14.03.2022
(51) Int. Cl.: A23L 7/122, A21D 13/13

(54) **A COMPOSITE BROWNIE AND COOKIE COMESTIBLE PRODUCT**
ZUSAMMENGESETZTES BROWNIE- UND KEKS-LEBENSMITTELPRODUKT
PRODUIT COMESTIBLE COMPOSITE BROWNIE ET COOKIE

(30) Priority: 19.03.2021 GB 202103855
(43) Date of publication of application: 24.01.2024
(73) Proprietor: Intercontinental Great Brands LLC, East Hanover, NJ 07936 (US)
(72) Inventor: CHUKHRAI, Olga, 55-040 Kobierzyce (PL); KOBYLANSKI, Lukasz, 55-040 Kobierzyce (PL); SPARNIAK, Malgorzata, 55-040 Kobierzyce (PL)
(74) Representative: Boult Wade Tennant LLP
(86) International application number: PCT/IB2022/052277
(87) International publication number: WO 2022/195453

(56) References cited:
- EP-A1- 2 384 630
- EP-A1- 3 357 341
- US-A- 4 738 859
- DATABASE GNPD [online] MINTEL; 8 July 2019 (2019-07-08), ANONYMOUS: "Chocolate Chip Brookies", XP055930112, retrieved from https://www.gnpd.com/sinatra/recordpage/6683423/ Database accession no. 6683423

## Description

The present invention relates to the provision of a composite brownie and cookie comestible product, also known as a "brookie", and a method of producing this. In particular, the invention relates to the industrial production of brookies which have a good appearance and can maintain an appropriate distinction between the texture of the cookie portion and the brownie portion.

In recent years there has been a trend to provide composite baked products that bring together characteristics of known comestibles. For example, there was a trend in 2013 for "cronuts", which are a combination of a croissant and a doughnut.

Another combined product is a "brookie", which is a combination of a brownie and a cookie. Brownies are well known baked comestibles and are produced in the form a sheet cake, having a fudgy or cakey texture. Most commonly, brownies are a chocolate containing product, i.e. a chocolate brownie. Similarly, cookies are well known baked comestibles which have a crispy surface and may have a chewier centre. Homemade brookie products are made by layering cookie and brownie doughs before baking and it is known for either layer to be placed on top.

Homemade recipes for making Brookies are well-known, including: (1) "Brookies", Preppy Kitchen, John Kanell (https://preppykitchen.com/brookies/); (2) "Brookies (Brownie + Chocolate Chip Cookie Bars)", Baker Bettie (https://bakerbettie.com/chocolate-chip-cookie-brownie-sheet-cake/); (3) "Chocolate Chip Cookie Brownies", A Latte Food (https://www.alattefood.com/chocolate-chip-cookie-brownies/); (4) "Brookie Recipe", DessArts (https://www.dessarts.com/brookie-recipe/; (5) "Chocolate Chip Cookie Brownies", Pinch of Yum (https://pinchofyum.com/chocolate-chip-cookie-brownies#comments); (6) "Brookies (Brownie and Chocolate Chip Cookie Bars)", Jenn Segal (https://www.onceuponachef.com/recipes/brookies.html). However, none of these methods are suitable for application to industrial production of this type of product.

US 4738859 A discloses a process for making cookies whereby added food bits, chunks and particles are securely fastened to the cookies while at the same time are prominently displayed in the final baked product.

"Chocolate Chip Brookies" - Mintel, database accession no. 6683423, discloses packaged chocolate chip brookies, the kosher product is free from artificial colors or flavors and retails in a 12-oz (340 g) pack, containing four units and bearing a QR code.

EP 2384630 A1 is directed to a soft cake having appropriate shelf life and comprising outer layers of baked dough in direct contact with an inner core or "heart" which resembles the unbaked dough of the soft cake. In particular, the soft cake is a brownie-type pastry wherein the core of the pastry simulates the unbaked heart commonly known from a fresh piece of brownie.

EP 3357341 A1 relates to a comestible bakery product which contains one or more sources of cocoa butter (CB) or cocoa butter equivalent (CBE).

The present invention seeks to provide a method suitable for industrially producing a brookie product which overcomes, or substantially reduces, the various problems associated with the prior art, or at least provide a commercially useful alternative.

According to a first aspect there is provided a method of producing a composite brownie and cookie comestible product, the method comprising:
providing a plurality of cookie dough slabs having a mean diameter of from 7-15mm;
forming a layer of brownie dough;
depositing the slabs of cookie dough to provide a substantially complete layer across an upper surface of the brownie dough and to thereby form a composite dough product, wherein the composite dough product has a ratio of brownie dough to cookie dough of from 5:5 to 9:1 by weight;
baking the composite dough product to form a composite brownie and cookie comestible product
wherein the cookie slabs have a substantially constant thickness of from 1.5 to 3mm.

The present disclosure will now be described further. In the following passages, different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous

The method produces a composite brownie and cookie comestible product. This will be referred to hereafter interchangeably as a "brookie". In particular, the brookie produced by the method disclosed herein has an upper layer resembling a conventionally baked cookie, formed intimately with a lower layer resembling a conventionally baked brownie product.

The method comprises a number of steps. As will be appreciated, the steps may be carried out in a batch or continuous process. Additional steps may be performed between the listed steps. In a continuous process, the steps may be carried out in an overlapping fashion.

According to a first step a plurality of cookie dough slabs are provided. Compositions for cookie doughs are well known in the art and typically comprise eggs, sugar, flour and oil. Preferably the cookie dough mix comprises more than 30 wt.% of flour. Further details of the preferred cookie dough composition are provided below, together with an exemplary recipe. Preferably the cookie dough of the cookie dough slabs has a moisture content of 10-14wt% and/or a water activity of from 0.5 to 0.85. This means that the baked cookie portion of the product will have a chewy centre. Preferably the cookie dough has a density of 1.1 to 1.4g/cm³.

The cookie dough is provided in the form of slabs. Since the cookie dough has a high plasticity, it retains the shape of the slabs when formed. The slabs are substantially planar bodies, i.e. they have a thickness that it less than their width or length. The slabs may be provided in any suitable shape, such that they may be circular discs, or square slabs or any similar arrangement. The slabs may have irregular edges or shapes. Substantially square or rectangular slabs are most preferred.

The edges of any shape slab will typically have a degree of irregularity. For example, when extruding dough, the blade for cutting the dough into slabs may cause some tearing of the slab edges. Thus, for example, a square cross-section of slab may be distorted or irregular because of minor temporary adhesion of the dough to the blade.

The slabs have a mean diameter of from 7-15mm, preferably 8 to 14mm and most preferably 8 to 12mm. That is, the mean diameter across the plurality of slabs falls within the range of 7-15mm. It is important that the diameter falls within this range, since if the values are too small or too large then the method tends to produce a smooth layer of cookie on the brownie, which is not desirable.

As will be appreciated, while the "diameter" is clear for cookie dough provided in the form of circular discs, for other shapes the diameter is the mean dimension across the slab shape through the centre (i.e. an average of all possible width measurements). Thus, for a square slab, the mean diameter will fall somewhere between the length of a side and the length between the diagonally opposed corners. The cookie slabs have a substantially constant thickness of from 1.5 to 3mm, preferably 2 to 2.5mm. This thickness allows a suitable number of the slabs to be stacked in an overlying form to provide a desirable thickness of the cookie layer across the brownie layer. A plurality of the slabs can overlap on the brownie dough without the cookie layer becoming undesirably thick.

Preferably the cookie dough slabs are formed by extrusion and cutting the extrudate. This is desirable since it is possible to quickly and readily produce a plurality of substantially identical cookie dough slabs quickly on a production line.

The inventors found that extruded cookie dough slabs could have a tendency to stick too much to the cutting equipment, leading to distortion of the slabs, rather than just irregular edges. They found that this could be addressed by ensuring that cookie dough of the cookie dough slabs has a lower than normal water content. They found that this could be achieved by using a recipe which was free from added water, or one which contained pregelatinised starch. The use of pregelatinised starch lead to a crispier texture and permitted that dough to have a reduced water content (such as 50% or less than normal). Pregelatinised starch is a well-known ingredient which is readily available.

According to a second step, a layer of brownie dough is formed. Compositions for brownie doughs are well known in the art and typically comprise eggs, sugar, flour and butter. A suitable brownie dough recipe is disclosed in WO2011/35072.

Preferably the brownie dough mix comprises at most 25 wt.% of flour. Further details of the preferred brownie dough composition are provided below, together with an exemplary recipe

The layer of brownie dough is generally formed by loading the brownie dough into a tray or baking tin. The brownie dough is a liquid dough which readily confirms to the shape of the tray, whereas the the cookie dough is a more solid dough which is shape retaining. Accordingly, the brownie dough mixture will be more fluid than the cookie dough which helps it conform to and fill around the lower surfaces of the slabs when subsequently deposited. The cookie dough slabs will stick to the brownie.

Preferably the layer of brownie dough has a substantially constant thickness of from 5 to 20 mm, preferably from 10 to 15 mm. This thickness gives a good final product form. The final product preferably has a thickness of 20 to 30mm and preferably about 25mm, including the brownie and cookie layers.

According to a third step, the slabs of cookie dough are deposited to provide a substantially complete layer across an upper surface of the brownie dough and to thereby form a composite dough product. By "substantially complete" it is meant that from a top-down view, the slabs of cookie dough will occlude sight of the underlying brownie layer. It should, nonetheless, be appreciated that when stacking slabs of cookie dough, it may be possible from another angle to see through to the underlying brownie mix due to the miss-stacking of the slabs.

The step of deposition here typically involves a random or irregular stacking of the cookie slabs, rather than careful placing of the slabs in position. That is, the slabs are irregularly placed or scattered across the brownie. This random stacking or scattering is desirable as it more closely reproduces the undulating cookie surface that is desired.

In one embodiment, the method further comprises a step of pressing the composite dough product to partially immerse the cookie dough slabs in the brownie dough. This helps to ensure a good adhesion between the dough parts. However, where the brownie dough is sufficiently soft this step may not be required. Furthermore, too much compaction can cause brownie to leak through to the surface or compromise the texture distinction by encouraging moisture migration.

The composite dough product has a ratio of brownie dough to cookie dough of from 5:5 to 9:1 by weight. Preferably the composite dough product has a ratio of brownie dough to cookie dough of from 6:4 to 8:2, preferably from 7:3 to 75:25 by weight. The inventors have found that from a taste perspective, this ratio is preferred. Nonetheless, in a typical portion size this still permits sufficient slabs to provide a complete covering. The inventors have also found that a ratio of 8:2 or lower is generally preferred to ensure that a good texture contrast is obtained and that the cookie retains a crunchy texture.

Preferably the method further comprises scattering chocolate chips across the layer of cookie dough slabs. Chocolate chips are desirable as a complement to the (usually chocolate) brownie and cookie components. Other ingredients, such as nuts or candies may be desirable and are known as suitable cookie components.

According to a fourth step, the composite dough product is baked to form a composite brownie and cookie comestible product. Baking apparatus and conditions are well known in the industry and any suitable baking step may be performed. A typical baking process will involve the use of a conveyor belt to transport trays of the brookie dough through an oven.

Preferably the cookie is shelf stable for at least 6 months when stored at 20°C, and preferably at least 7 months when stored at 20°C. By shelf stable it is meant that there remains a good texture difference between the cookie and brownie portions. This can be assessed by looking at the Aw of each portion and noting that there remains at least a 0.1 and more preferably at least a 0.2 distinction between the portions (where the cookie portion has a lower Aw).

Preferably the method further comprises dividing the composite brownie and cookie comestible product into individual portion sizes. Preferably an individual portion has a weight of about 10 to 50 g, more preferably 20 to 40g, and most preferably 20 to 30g. The individual portions can then be sealed into packaging, either singly or together with a number of other portions. In one embodiment the brookie may be provided as a family size portion of up to 300g, preferably about 200g. In this case the thickness and structure of the brookie remains the same as for individual portions.

The inventors sought to produce a brookie product on an industrial scale, but encountered a number of unexpected difficulties. These difficulties were overcome by performing the steps of the method set out herein.

The inventors tried a number of approaches to obtain a suitable product. At first they tried assembling a product by combining a prebaked cookie product with a prebaked brownie product and adhering them together with a chocolate layer. However, this lead to the cookie becoming moist and soggy.

The inventors also tried to produce a brookie where the cookie layer was the lower layer. However, the product with bottom part of cookie layer did not deliver good visual aspect of the product (not visible enough in the product) and the texture was too hard and chewy.

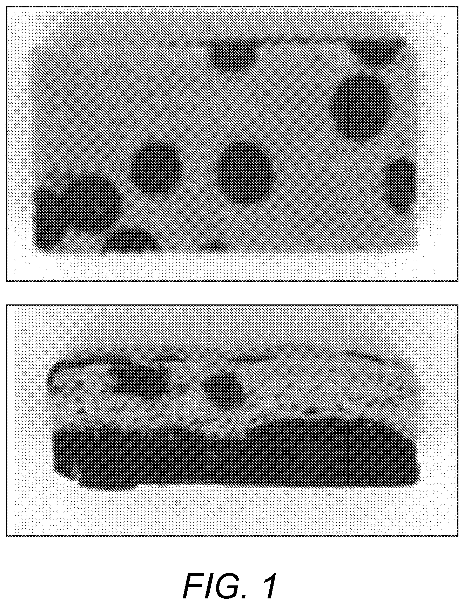

The inventors tried to produce a brookie where the cookie layer was the top layer. Conventionally, when making a cookie, the dough spreads and cracks to give a characteristic irregular surface appearance. However, the inventors found that when a cookie dough is placed on a brownie dough, this produced a two-layered product having two substantially flat layers without the cookie-like appearance (see Figure 1). That is, when on the liquid brownie dough the behaviour of the cookie dough was totally different. The product did not resemble the ideal product and there was a poor texture distinction between the components, with both layers resembling a cake. This meant that a desirable brookie could not be readily made on an industrial scale.

Surprisingly, the inventors found that by extruding slabs of cookie and stacking them roughly across the brownie dough, they could produce a product with continuous (i.e. no holes) cookie that has the dimpled rough appearance of a cookie, without forming a smooth constant surface layer (i.e. constant thickness). The product with cookie layer on top in this way performed much better and delivered a nice visual and multi texture perception. Furthermore, the product retained a good shelf-stable texture difference between the two different portions. This random stacking meant that the mass-produced appearance observed with the layered dough approach could be avoided.

There is also described herein a packaged, sealed, composite brownie and cookie comestible product obtainable by the method described herein. The product itself has a distinctive appearance associated with a handmade brookie product and can thus be distinguished from other industrially produced (and packaged) brookie products as a consequence of the method steps described herein. The products may be packaged individually, or packaged with a plurality in a shared sealed packaging. Such packaging approaches are well known in the baked comestible field for products such as brownies.

The inventors sought to provide a brookie product with a stable texture difference between the cookie and brownie portions. In addition to the foregoing method, the inventors found that certain aspects of the recipes could help to ensure that the textures were observed and maintained, as shown in the exemplary studies below. In particular, the inventors found that it was desirable to suppress the water activity in the brownie dough so as to make it hold onto its water contentThe water activity of the cookie dough is selected to encourage a crispy texture.

The inventors found that it was especially preferred that the brownie contained plasticizers such as glucose syrup and glycerin. These plasticisers allow a lower addition of water, reducing the migration of the water from the brownie to the cookie portions. Preferably such plasticisers are present in an amount of 5 to 10wt% of the brownie dough. Glycerin itself is preferably used in amounts of less than 5wt% to avoid perception of a metallic off-taste.

The brownie dough may also comprise one or more gum ingredients. Gum additives are well known in the art and are beneficial here as they can make the brownie dough more viscous and keep crumbs of cookie on the surface, i.e. to reduce sinking into the brownie dough. Gums include xanthan gum and guar gum and are preferably used in amount of 0.01 to 0.1wt%.

The inventors have found that is especially preferred that the cookie dough does not contain plasticizers such as glucose syrup and glycerin. Rather, it preferably contains only disaccharide sugars and no monosaccharides or glycerine. This avoids depressing the water activity, which is the driving force to achieve a crispy product.

Preferably the cookie dough also contains pregelatinized starch. Pregelatinized starch is a high molecular weight polymers with higher Tg. This makes the cookie crispy. When the product is reaching equilibrium, the starch has a high Tg at the equilibrium moisture and therefore keeps the product crisp.

The inventors also found that it was desirable that the cookie and brownie recipes had a water activity which is as close as possible. This was found to minimize moisture transfer between the cookie part and the brownie and provide a dual textured eating experience (i.e., crunchy cookie layer and keep soft brownie layer). Thus, the formulation retained more moisture in soft brownie dough - because of depressing Aw in the brownie (which was not depresses in the cookie). Consequently it was possible to maintain the moisture at equilibrium in formula. The following table shows how the recipes could be preferably formulated to achieve these benefits.

| | Water Activity (aw) | | Moisture,% | |
|---|---|---|---|---|
| | unbaked | baked | unbaked | baked |
| Cookie | 0.77 to 0.82 | 0.66 to 0.70 | 10.00 to 12.00 | 6.00 to 9.00 |
| Brownie | 0.77 to 0.80 | 0.68 to 0.71 | 17.00 to 19.00 | 10.00 to 15.00 |
| Entire | x*not measured | 0.67 to 0.71 | x*not measured | 10.00 to 14.00 |

An exemplary process for producing the brookie product will now be described.

On a production line a first amount of brownie dough is filled into a tray. A filing is then deposited onto the first amount of brownie dough and then a second layer of brownie dough is filled on top. The total thickness of the three layers is preferably about 10mm. Due to the soft nature of the dough, the three layers have a substantially flat upper surface in the tray.

Separately, a cookie dough is produced and extruded with a square cross-section (~10mm along each side). Individual slabs are cut off having a depth of about 2mm and collected on a conveyor belt. These slabs are then fed to a chunk depositor to apply a consistent layer across the brownie dough in the tray. The chunk depositor may also be used to deposit chocolate drops.

Preferably the extruder producing the cookie slabs is provided in the production line such that the slabs are cut and continuously deposited in a consistent layer across the brownie dough.

The loaded trays are conveyed through an oven, cooled and then cut in both directions. The products are then cooled further and packaged.

### Definitions

A "dough" as used herein refers to the hydrated malleable formulation which is ready to be baked and does not include dry mixes of the ingredients per se. The composite dough product, therefore, the dough which, when baked, provides a composite brownie and cookie comestible product.

By the term "flour" is meant the powder obtained by grinding or milling cereals such as wheat, oat, barley, rye, rice, corn, millet and the like and pseudo-cereals such as buckwheat and quinoa. The flour can be a "whole" flour, that is to say, a ground or milled grain whose principal components - the starchy endosperm, the germ and the bran - are present in the same relative proportions as they are in the intact grain. Preferably, the flour is a wheat flour, that is to say, the product prepared from wheat grain by grinding or milling processes in which the bran and germ are at least partially removed and the portion that remains is ground to a suitable degree of fineness. In the context of the present disclosure, the term "flour" does not include extraneous starches such as corn starches or modified starches.

By the term "starches" it is meant extraneous starches, that is to say, starches that are added to the dough mix separately and do not form part of the flour or any other component of the inner dough. Starches are carbohydrates comprising a large number of glucose units joined by glycosidic bonds. Common sources of starches include potatoes, wheat, corn and rice. Native starches are those which are not modified following isolation from their source, such as native potato starch.

In the native form, starches are present as partially crystalline "granules" that are insoluble in water. Upon heating in water, the granules swell and burst, the semi-crystalline structure is lost and the more linear amylose molecules start leaching out of the granule, increasing the mixture's viscosity. This process is called starch gelatinization. During cooking, the starch becomes a paste and increases further in viscosity. A native starch has not been gelatinized. By contrast, a pregelatinized starch, such as a pre-cooked starch, has been at least partially gelatinized. Pregelatinized starches, such as pregelatinized corn starch, are commercially available.

Other types of starches include modified starches, that is, a starch that has been modified to allow enhance function under conditions frequently encountered during processing and storage. These modifications can be achieved by, for example, acid treatment, alkali treatment, oxidation, acetylation and the like. Modified starches are commercially available.

The water activity (Aw) of a product is a notion which is well known in the food industry field. This value measures the availability of water in a sample. In most cases, this water activity is not proportional to the water content of the product. Methods for measuring Aw of a product are known to the person skilled in the art. For example, it can be measured with an Aqualab CX-2 or series 3, or a Novasina. All Aw values indicated hereafter are measured at 25±0.1°C. Aw is the equilibrium driving force for movement of moisture in the product. Once all components in product have same Aw, moisture will no longer migrate.

Typically, crispy products have a low moisture of less than 4wt% and a low Water Activity (Aw) of less than 0.3. To the contrary, soft products usually have a high moisture of at least 10wt% and/or an Aw of more than 0.6 (generally 0.6 to 0.8). The brookie product described herein preferably has an Aw of 0.6 to 0.8.

Thermal glass transition (Tg) is the physical property measurement that describes the relationship between moisture, food composition and texture. Critical moisture (Mc) is the moisture at which the product transitions texturally. Critical humidity (Aw) is the product humidity at the moisture at which the product transitions texturally.

### Figures

The invention will now be described further in relation to the following non-limiting figures, in which:
Figure 1 shows a top-down view and a side-on view of a brookie formed with a layer of cookie dough on brownie dough. The circles are added chocolate drops. There are two substantially even layers provided and the upper layer does not resemble a cookie.

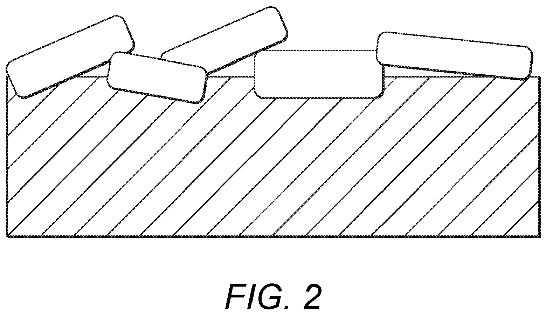

Figure 2 is a cross-sectional view showing slabs of cookie dough on a brownie dough layer.
Figures 3A-F shows top-down view and a side-on views of several brookies formed in accordance with the examples.
Figure 4 shows stability trials results.
Figure 5 shows a plurality of extruded and cut slabs, showing a roughly square shape with irregular edges.

### Examples

The invention will now be described further in relation to the following non-limiting examples.

A brownie recipe was formulated as follows for use in the brookie product. For comparison, a conventional brownie recipe is provided along-side. Due to rounding, the values may not exactly total 100%.

| Ingredients | brookie brownie dough (%) | Conventional brownie dough (%) |
|---|---|---|
| Wheat Flour | 13(12-15) | 13(12-15) |
| Sugar | 19.5 ( 18 -20) | 19.5 ( 18 -20) |
| Eggs | 18.5 ( 18-20) | 18.5 ( 18-20) |
| Glucose syrup | 3.5 (3-4) | 3.5 (3-4) |
| Fats | 21 (19-22) | 21 (19-22) |
| Water | 1 | 1 |
| Glycerin | 5 | 1.5 |
| Stabilisers and other ingredients | <1 | <1 |
| Gum | 0.03 | 0 |
| Chocolate | 17 | 17 |
| Total | 100 | 100 |

The increased glycerine, in combination with the glucose syrup, has a plasticising effect, retaining moisture in the brownie dough. The addition of the gum (0.01-0.05wt%) helps to keep the cookie dough separate from the brownie dough.

A cookie recipe was formulated as follows for use in the brookie product. The recipe optionally contains pregelatinised starch (0.5 to 5wt%). Due to rounding, the values may not exactly total 100%.

| Ingredients | Brookie cookie dough (%) |
|---|---|
| Wheat Flour | 46 (44 -47) |
| Sugar | 24.5 ( 23-26) |
| Eggs | 7 |
| Butter | 24.5 (23-26) |
| Water | 1 |
| Pregelatinised starch | Optionally 0.5-5 |
| Stabilisers and other ingredients, such as leavening agents | <2 |
| Total | 100 |

The ranges for each ingredient provided in the tables above may each be taken in isolation and generalised across the scope of the invention with respect to the claimed dough recipes.

### 1. Sample configurations

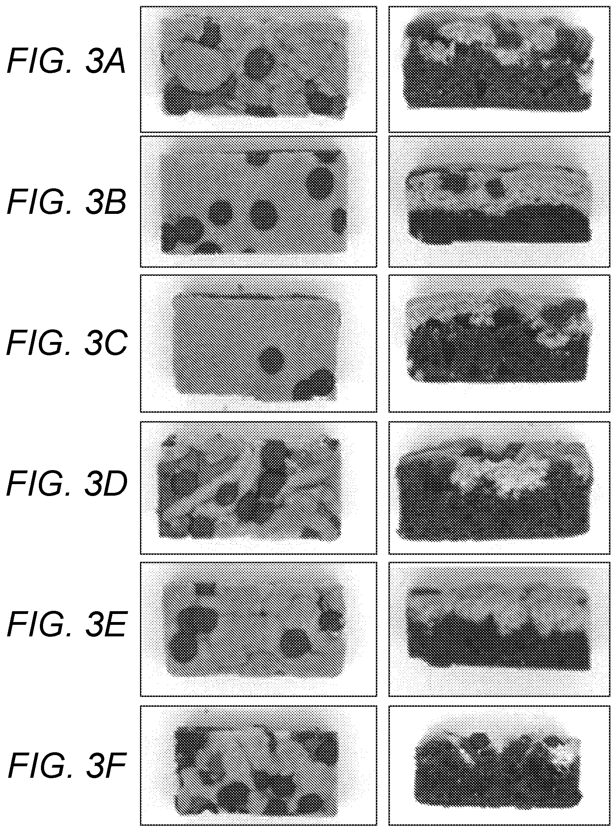

With reference to Figure 3, the following arrangements were tested:

**Table 1: Product configurations**

| **Prototype** | **Surface** | **Brownie:cookie ratio (wt.)** | **Figure** |
|---|---|---|---|
| 1 | Slabs | 6:4 | 3A |
| 2 (comparative) | Layer | 6:4 | 3B |
| 3 (comparative) | Layer | 75:25 | 3C |
| 4 | Slabs (pressed) | 75:25 | 3D |
| 5 | Slabs | 6:4 | 3E |
| 6 | Slabs | 75:25 | 3F |

As can be seen from the figures, prototypes 1,4,5,6 combine nice appearance of both layers (cookie and brownie). The layers are recognizable. The slabs of cookie deliver a "homemade perception" and pronounced crunchy texture.

Comparative prototypes 2 and 3 provided a flat cookie layer which was highly rejected by assessors because the product appearance was too industrial. In addition, the cookie part did not deliver desired crunchiness and dual texture.

### 2. Shelf Life Study

Sensory profile of the products was measured on 4 cakes during 6 months of shelf life. Test products were stored in metalized foil (individual sealed pouches) and aged in a storage room under controlled conditions at 20°± 2°C; 60 ± 5% rel. humidity.

At each defined time interval, the required amount of product was picked up for testing and also was given to analytical laboratory for performing the analyses.

Each test person evaluated the samples individually on an evaluation sheet with the pre-defined attributes. The samples were blinded by 3-digit code and presented to the testers in a randomized order. The tasters has not been told the age of the following samples in order to avoid any bias.

**Table 2: Product samples that were assessed during shelf life**

| | Brownie | cookie | drops | filling | |
|---|---|---|---|---|---|
| Sample 146 | 51.10% | 36.25% | 7.45% | 5.20% | Full brownie + CRUMBS OF COOKIE RATIO 60/40 |
| Sample 485 | 64.60% | 21.30% | 7.50% | 6.60% | full brownie + pressed cookie (zig zag) COOKIE RATIO 75/25 |
| Sample 592 | 48.25% | 36.00% | 7.75% | 8.00% | half brownie + crumbs COOKIE RATIO 60/40 |
| Sample 627 | 32.10% | 21.30% | 7.50% | 6.60% | full brownie + CRUMB OF COOKIE RATIO 75/25 |

The filling is a part of the brownie dough, prepared in accordance with the teaching of WO2011135072.

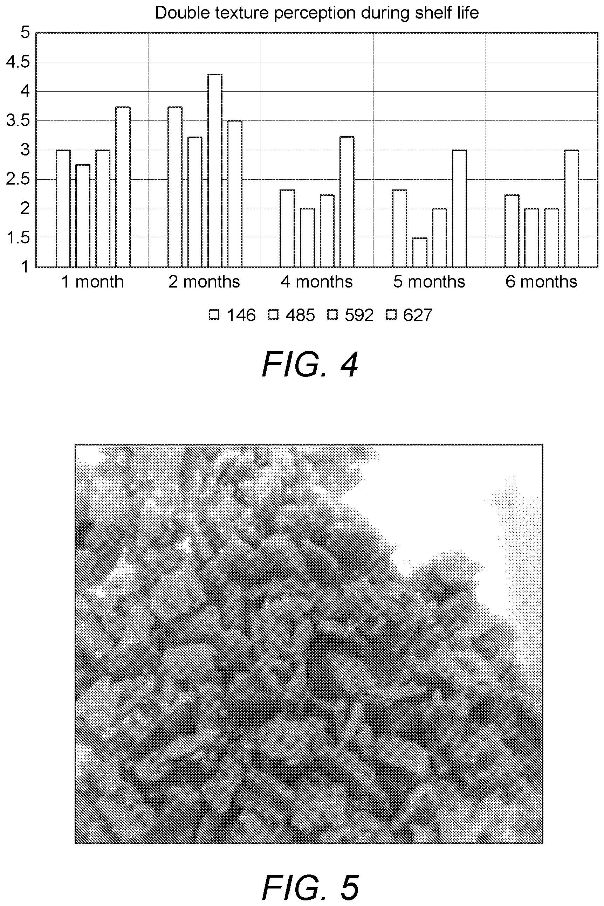

Figure 4 shows the dynamism of double texture perception in the samples during shelf life evaluation. The score for attribute: (1- too weak, 5- too strong). In this Figure the columns at each time-spacing are provided in the same order: 146 then 485 then 592 then 627.

The results show that double texture perception was decreasing over time, but in overall the results are very promising, and it is especially indicated in sample 627 with very high score.

We have also observed that time has an impact on texture of the product: brownie part gets more drier and crumbly; cookie part - gets more crumbly within the time but the cookie taste is still well perceived and differentiated in terms of texture from brownie part.

Samples evaluation over 6 month of shelf life showing possibility to maintain double texture perception within the product.

### 3. Further Shelf Life Study

Sensory profile of the products was measured on 4 cakes during 6 months of shelf life. Test products were stored in metalized foil (individual sealed pouches) and aged in a storage room under controlled conditions at 20°t 2°C; 60 ± 5% rel. humidity.

At each defined time interval, the required amount of product was picked up for testing and also was given to analytical laboratory for performing the analyses.

Each test person evaluated the samples individually on an evaluation sheet with w the pre-defined attributes. The samples were blinded by 3- digit code and presented to the testers in a randomized order. The tasters has not been told the age of the following samples in order to avoid any bias.

**Table 3: Product samples that were assessed during shelf life**

| **Sample:** | **371** | **193** | **248** | **461** |
|---|---|---|---|---|
| Brownie dough | 57.9% | 60.1% | 60.1% | 60.1% |
| filling | 8.4% | 7.4% | 6.1% | 6.1% |
| chocolate | 7.2% | 7.4% | 7.4% | 7.4% |
| cookie part | 30.1% | 30.2% | 30.2% | 30.2% |

Shelf life results showed that over the time there is impact on overall flavour and taste of the product. The most preferred samples are 371 and 193 because of the flavour intensity, aftertaste, and texture of brownie and cookie part.

Brownie part: over the time it gets less soft and drier, less melty. In some cases present sugar crystals, filling less melty and sticky.

Cookie part: over the time it gets harder, crumbly. At 6 and 7 months - still noticeable the difference in the texture between brownie and cookie dough.

Physical chemistry analysis showed that product is changing during shelf life study - Aw and moisture in the product is decreasing within the time.

## Claims

1. A method of producing a composite brownie and cookie comestible product, the method comprising:
providing a plurality of cookie dough slabs having a mean diameter of from 7-15mm, as measured according to the present disclosure;
forming a layer of brownie dough;
depositing the slabs of cookie dough to provide a substantially complete layer across an upper surface of the brownie dough and to thereby form a composite dough product, wherein the composite dough product has a ratio of brownie dough to cookie dough of from 5:5 to 9:1 by weight;
baking the composite dough product to form a composite brownie and cookie comestible product,
wherein the cookie slabs have a substantially constant thickness of from 1.5 to 3mm.

2. The method according to claim 1, wherein the composite dough product has a ratio of brownie dough to cookie dough of from 6:4 to 8:2 by weight.

3. The method according to claim 2, wherein the composite dough product has a ratio of brownie dough to cookie dough of about 7:3 by weight.

4. The method according to any preceding claim, wherein the method further comprises scattering chocolate chips across the layer of cookie dough slabs.

5. The method according to any preceding claim, wherein the cookie dough slabs are formed by extrusion and cutting the extrudate.

6. The method according to claim 5, wherein the cookie dough of the cookie dough slabs comprises:
(i) no added water; and/or
(ii) pregelatinised starch.

7. The method according to any preceding claim, wherein the cookie dough of the cookie dough slabs has:
(i) a moisture content of 10-14wt%; and/or
(ii) a water activity of from 0.5 to 0.85; and/or
(iii) a density of 1.1 to 1.4g/cm³.

8. The method according to any preceding claim, wherein the cookie dough mix comprises more than 30 wt.% of flour and/or wherein the brownie dough mix comprises at most 25 wt.% of flour.

9. The method according to any preceding claim, wherein the layer of brownie dough has a substantially constant thickness of from 5 to 20 mm, preferably from 10 to 15 mm.

10. The method according to any preceding claim, wherein the method further comprises a step of pressing the composite dough product to partially immerse the cookie dough slabs in the brownie dough.

11. The method according to any preceding claim, wherein the method further comprises the dividing the composite brownie and cookie comestible product into individual portion sizes and sealing them into packaging.

## Patentansprüche

1. Verfahren zum Produzieren eines zusammengesetzten essbaren Brownie- und Keksprodukts, das Verfahren umfassend:
Bereitstellen einer Vielzahl von Keksteigplatten, die einen mittleren Durchmesser von 7-15 mm, wie gemäß der vorliegenden Offenbarung gemessen, aufweisen;
Ausbilden einer Schicht eines Brownieteigs;
Aufbringen der Keksteigplatten, um eine im Wesentlichen vollständige Schicht über eine obere Oberfläche des Brownieteigs hinweg bereitzustellen und um dadurch ein zusammengesetztes Teigprodukt auszubilden, wobei das zusammengesetzte Teigprodukt ein Gewichtsverhältnis von Brownieteig zu Keksteig von 5 : 5 bis 9 : 1 aufweist;
Backen des zusammengesetzten Teigprodukts, um ein zusammengesetztes essbares Brownie- und Keksprodukt auszubilden,
wobei die Keksplatten eine im Wesentlichen konstante Dicke von 1,5 bis 3 mm aufweisen.

2. Verfahren nach Anspruch 1, wobei das zusammengesetzte Teigprodukt ein Gewichtsverhältnis von Brownieteig zu Keksteig von 6 : 4 bis 8 : 2 aufweist.

3. Verfahren nach Anspruch 2, wobei das zusammengesetzte Teigprodukt ein Gewichtsverhältnis von Brownieteig zu Keksteig von etwa 7 : 3 aufweist.

4. Verfahren nach einem der vorstehenden Ansprüche, wobei das Verfahren ferner ein Streuen von Schokoladenstückchen über die Schicht von Keksteigplatten hinweg umfasst.

5. Verfahren nach einem der vorstehenden Ansprüche, wobei die Keksteigplatten durch Extrusion und Schneiden des Extrudats ausgebildet werden.

6. Verfahren nach Anspruch 5, wobei der Keksteig der Keksteigplatten umfasst:
(i) kein zugesetztes Wasser; und/oder
(ii) vorgelatinierte Stärke.

7. Verfahren nach einem der vorstehenden Ansprüche, wobei der Keksteig der Keksteigplatten aufweist:
(i) einen Feuchtigkeitsgehalt von 10-14 Gew.-%; und/oder
(ii) eine Wasseraktivität von 0,5 bis 0,85; und/oder
(iii) eine Dichte von 1,1 bis 1,4 g/cm³.

8. Verfahren nach einem der vorstehenden Ansprüche, wobei die Keksteigmischung zu mehr als 30 Gew.-% Mehl umfasst und/oder wobei die Brownieteigmischung zu höchstens 25 Gew.-% Mehl umfasst.

9. Verfahren nach einem der vorstehenden Ansprüche, wobei die Schicht des Brownieteigs eine im Wesentlichen konstante Dicke von 5 bis 20 mm, vorzugsweise von 10 bis 15 mm, aufweist.

10. Verfahren nach einem der vorstehenden Ansprüche, wobei das Verfahren ferner einen Schritt eines Pressens des zusammengesetzten Teigprodukts umfasst, um die Keksteigplatten in den Brownieteig teilweise einzutauchen.

11. Verfahren nach einem der vorstehenden Ansprüche, wobei das Verfahren ferner das Unterteilen des zusammengesetzten essbaren Brownie- und Keksprodukts in einzelne Portionsgrößen und deren Einsiegeln in Verpackungen umfasst.

## Revendications

1. Procédé de production d'un produit comestible composite de brownie et de cookie, le procédé comprenant :
la fourniture d'une pluralité de plaques de pâte à cookie ayant un diamètre moyen allant de 7 à 15 mm, tel que mesuré selon la présente description ;
la formation d'une couche de pâte à brownie ;
le dépôt des plaques de pâte à cookie pour fournir une couche sensiblement complète sur une surface supérieure de la pâte à brownie et pour former ainsi un produit de pâte composite, dans lequel le produit de pâte composite a un rapport entre la pâte à brownie et la pâte à cookie de 5:5 à 9:1 en poids ;
la cuisson du produit de pâte composite pour former un produit comestible composite de brownie et de cookie,
dans lequel les plaques de cookie ont une épaisseur sensiblement constante de 1,5 à 3 mm.

2. Procédé selon la revendication 1, dans lequel le produit de pâte composite a un rapport entre la pâte à brownie et la pâte à cookie de 6:4 à 8:2 en poids.

3. Procédé selon la revendication 2, dans lequel le produit de pâte composite a un rapport entre la pâte à brownie et la pâte à cookie d'environ 7:3 en poids.

4. Procédé selon l'une quelconque revendication précédente, dans lequel le procédé comprend en outre la dispersion de pépites de chocolat sur la couche de plaques de pâte à cookie.

5. Procédé selon l'une quelconque revendication précédente, dans lequel les plaques de pâte à cookie sont formées par extrusion et découpe de l'extrudat.

6. Procédé selon la revendication 5, dans lequel la pâte à cookie des plaques de pâte à cookie comprend :
(i) aucune eau ajoutée ; et/ou
(ii) de l'amidon prégélatinisé.

7. Procédé selon l'une quelconque revendication précédente, dans lequel la pâte à cookie des plaques de pâte à cookie a :
(i) une teneur en humidité de 10 à 14 % en poids ; et/ou
(ii) une activité de l'eau de 0,5 à 0,85 ; et/ou
(iii) une densité de 1,1 à 1,4 g/cm³.

8. Procédé selon l'une quelconque revendication précédente, dans lequel le mélange de pâte à cookie comprend plus de 30 % en poids de farine et/ou dans lequel le mélange de pâte à brownie comprend au plus 25 % en poids de farine.

9. Procédé selon l'une quelconque revendication précédente, dans lequel la couche de pâte à brownie a une épaisseur sensiblement constante de 5 à 20 mm, de préférence de 10 à 15 mm.

10. Procédé selon l'une quelconque revendication précédente, dans lequel le procédé comprend en outre une étape de pressage du produit de pâte composite pour immerger partiellement les plaques de pâte à cookie dans la pâte à brownie.

11. Procédé selon l'une quelconque revendication précédente, dans lequel le procédé comprend en outre la division du produit comestible composite de brownie et de cookie en portions de taille individuelle et leur scellage dans un emballage.
